# EUROPEAN PATENT APPLICATION

(11) **EP 2 093 436 A2**
(43) Date of publication of application: **26.08.2009**
(21) Application number: 09153029.5
(22) Date of filing: 17.02.2009
(51) Int. Cl.: F16B 21/16

(54) **Fastening device and an unlocking and placement tool for such a fastening device**

(30) Priority: 22.02.2008 NL 2001314
(71) Applicant: Bolleboom, Paul, 2587 VC Den Haag (NL)
(72) Inventor: Bolleboom, Paul, 2587 VC Den Haag (NL)
(74) Representative: Ketelaars, Maarten F.J.M.

(57) **Abstract**

The invention relates to a fastening device (1) comprising an outer tubular body (5), an axially slidable tubular body inserted into the core, a spring (8) mounted inside the tubular body which, on the one hand engages with the core (7) and on the other hand engages with the tubular body (5), at least one opening in the wall (6) of the tubular body and an axially slidable locking member (13,14) which extends through the opening and is positioned in abutment against the core. Said core is provided on its upper end with an abutment surface which can engage with a tool (2) for axial movement of the core between a locking position in which a locking part (12) of the core is positioned in abutment against the locking member and a release position in which a relatively narrow release part (15) of the core is disposed opposite the locking member in a radial direction. The invention is characterized in that the core is pressed in an upward direction by the spring member into the locking/securing position, whereby the core can be brought into the release position by pressing the spring in a downward direction.

## Description

The invention relates to a fastening device comprising an outer tubular body, an axially slidable core placed within the tubular body, a spring member mounted inside the tubular body which, on the one hand engages with the core and on the other hand with the tubular body, at least one opening in the wall of the tubular body and an axially slidable locking member which extends through the opening and is positioned in abutment against the core, wherein said core is provided on the upper end of the tubular body with an abutment surface which can engage with a tool for axial movement of the core between a locking position in which a locking part of the core is positioned in abutment against the locking member and a release position in which a relatively narrow release part of the core is disposed in a radial direction opposite the locking member.

The invention also relates to an unlocking and placement tool for the mounting and removal of the fastening device.

A device as such, and the associated unlocking and placement tool are known from Dutch patent NL-A-1 018 734. This patent describes a system for securing sections of chairs, for example, to a floor of a hall, theatre, cinema end the like. To achieve this, the floor is provided with a bush with an internal circumferential groove. Using a bifurcated tool, the core is pulled upwards on a flared head from the tubular body in the opposing direction of the spring force. In this manner, the core is freed from locking balls of the locking member so that these locking balls may be moved radially on the inside of the tubular body and the tubular body can be lowered into position in the bush. To achieve this, an object to be clamped in position is placed between the substrate and a laterally extending end flange of the tubular body. After mounting the fastening device and separation of the wedge-shaped fastening tool, the core is pressed downwards into the tubular body by the spring so that a flared core portion engages the locking balls which are moved outwards in a radial direction through the wall of the tubular body. As a result, the locking balls fall into the internal slot of the bush so that the tubular body is secured in an axial direction in the bush.

The known device has the disadvantage that the required spring force needs to be relatively large in order to achieve reliable locking. Due to the large spring force constant, controlled release is difficult to achieve and the tool required to place and secure the device needs to be relatively heavy. Manipulating a wedge-like tool, into which the head of the tubular body is inserted, can be a relatively cumbersome task. Additionally, the flared upper end of the tubular body is freely accessible so that it can be loosened without the use of tools by unauthorized persons. Furthermore, it is not possible to clamp objects of varying thickness using the known device.

It is therefore an objective of the invention to provide an easily manageable fastening device which can be fastened with only very little effort. It is also an objective to provide a fastening device which can be easily coupled to a tool and which is difficult or impossible to remove without the use of a tool. Finally, it is an objective to provide a universal fastening device which can be used to fasten objects of varying thickness and dimensions.

To achieve this, a fastening device according to the invention is characterized in that the core is pressed in an upward direction by the spring member into the locking/securing position, wherein the core can be brought into the release position by pressing the spring in a downward direction, wherein the tubular body is provided on the upper end with a head surface which has a feed-through opening towards the abutment portion which is positioned in or beneath the head surface in the locking position, and wherein the tubular body is provided on an outer side with a screw thread and a slidable clamping body which can be moved along the screw thread.

The core is unlocked by exerting a pressure force thereon. This can be achieved in a controlled manner with a very simple tool. Since the action of unlocking the device is performed by exerting a pressure force in the longitudinal direction of the core, this may be performed simultaneously as the unlocking and placement tool is attached and as the tubular body is inserted into the receiving bush, the movement of which is also directed along the longitudinal axis of the core.

In addition, a flared upper end of the core is required in order to engage and the core can be entirely inserted into the bush to prevent accidental or unauthorized removal. It has also been shown that unlocking can also be achieved with minimal effort and that a lighter spring can be used in comparison with the known device, as the entire core can be inserted into the tubular body and is not accessible to unauthorized persons without the use of a tool.

On an upper end, the tubular body is provided with a head surface which has a feed-through opening towards the abutment portion which is located in or beneath the head surface. The tool may comprise a hand grip and a pin extending relative to the hand grip, the hand grip being separably connectable with the tubular body wherein, when coupled, the pin is made to engage via the feed-through opening in the end surface with the core in such a manner that this is moved in a downward direction into the release position and in which the spring, after separation from the tool, moves the core into the locking position.

On the exterior, the bush is provided with a clamping body which is slidable along the bush. This clamping body may be a wing nut which is screwed around and an external thread. By tightening the wing nut against the object to be attached, objects with varying thicknesses can be clamped without tolerance occurring.

It is noted that a locking pin is known from US patent 3,233,496, wherein a spring-loaded clamping body is mounted along the exterior of the tubular body. A tool can be used to position the locking pin in the release position as the core is moved in a downward direction in the opposing direction of the spring force. The clamping body can only make a relatively small stroke, the clamping force being determined by the constant of the spring force. In this respect, the known locking pin is less suitable to firmly secure objects of varying dimensions to a substrate.

Furthermore, a quick release ball-type locking pin is known from US 6,386,789, wherein a screw thread is provided around the tubular body with a fastening nut, for securing an object to a substrate, wherein the tubular body is secured by the pin by moving locking balls outwards in a radial direction. The known quick release locking device has the disadvantage that the pin extends outwardly from the tubular body in the locking position and is easily accessible. Moreover, the known quick release locking device is not provided with attachment and separation means by means of a specially designed tool and therefore increases the risk of operation of the quick release locking device by unauthorized persons. Also, damage may occur to a soft substrate if an object is secured to a soft substrate, such as a wooden floor and/or if insufficient clamping force is obtained.

The hand grip of a fastening device according to the invention preferably comprises a flat, magnetic abutment surface, the pin extending therefrom at a length which at least corresponds to the axial distance between the locking part and the release part of the core and in which the engagement means of the tubular body are formed with a flat surface and from a magnetic material. In this manner, the fastening device can be easily coupled with the release and placement tool. In doing so, the force required for the release action is based entirely on the magnetic attractive force which preferably corresponds to or is greater than the upward force exerted on the core by the spring.

In a further embodiment of the fastening device according to the invention, for the cooperative action with the clamping body, the insertion bush is provided in the close proximity of the upper end with a retainer flange extending laterally in relation to a longitudinal direction of the bush. In this manner, an object to be clamped can be secured firmly between the retainer flange and the clamping body, the clamping force being provided by the insertion bush. Accordingly, objects can also be firmly secured on soft substrates such as wooden floors, without damage occurring.

An embodiment of the fastening device and an unlocking [release] and placement tool according to the invention will be described below in greater detail with reference to the accompanying drawing, in which:
Fig. 1 shows a cross section of an assembly of a fastening device, a ball-shaped release and placement tool and an insertion bush according to the invention in the locked position,
Fig. 2 shows a cross section of the assembly according to Figure 1 in the operational mode in the release position, and
Fig. 3 shows an embodiment of an assembly according to Figure 2, wherein the insertion bush is provided with a retainer flange.

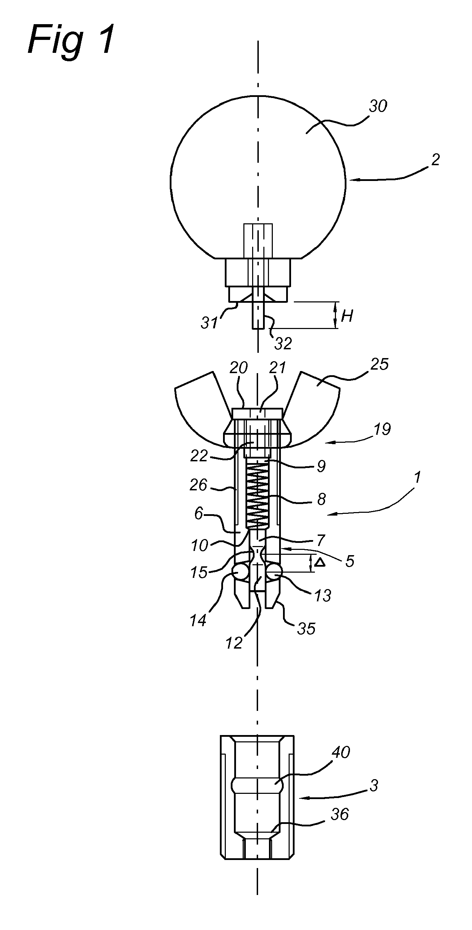

Figure 1 shows a fastening device 1, a separably connectable tool 2 and an insertion bush 3. The fastening device 1 comprises a tubular body 5 incorporating an axially slidable core 7. A helical spring 8 is mounted around the core 7 and rests, on the one side, against a stop 9 on the core and, alternatively, against an internal shoulder 10 of the wall 6 of the tubular body 5. The core is pushed by the spring 8 in an upward direction towards the locking position [shown]. In this position, a locking part 12 of the core 7 is disposed in abutment against locking balls 13, 14 which protrude through openings in the wall 6 of the tubular body 5. A relatively narrow release part 15 is located at an axial distance Δ from the locking part 12 of the core and is positioned by the downward movement of the core 7 in the opposing direction of the spring force opposite the locking balls 13, 14. In the release position, the locking balls 13, 15 can move inwards in a radial direction via the openings in the wall 6 of the tubular body 5.

On the upper end 19, the tubular body 5 is provided with a head surface 20 with a feed-through opening 21, through which access can be gained to an abutment portion 22 of the core 7.

A wing nut 25 is connected with the bush 5 and can be moved along the bush in an axial direction along an external screw thread 26.

The tool 2 comprises a spherically formed hand grip 30, a magnetic abutment surface 31 and a pin 32 extending transversely in relation to the abutment surface over a length H.

The length H is at least as great as the distance Δ between the locking member 12 and the release member 15 of the core 7. When the magnetic abutment surface 31 of the tool 2 engages with the flat head surface 20, the pin 32 engages via the feed-through opening 21 with the abutment portion 22 of the core 7 and the core is moved along a distance Δ downwards. This slides the fastening device 1 into the release position and this can then be lifted by the hand grip 30, so that the tubular body 5 can be inserted into the bush 3. As this occurs, the chamfered lower end 35 of the tubular body 5 automatically assumes its central position by coming into contact with a conically shaped lower receiving end 36 of the bush 3. The locking balls 13, 14 fall into the annular slot 40. After separation of the tool 1, the core 7 in the bush 3 will return to the locking position shown in figure 1 and the locking balls 13, 14 will be pushed into abutment against the wall of the slot 40 in a radial direction.

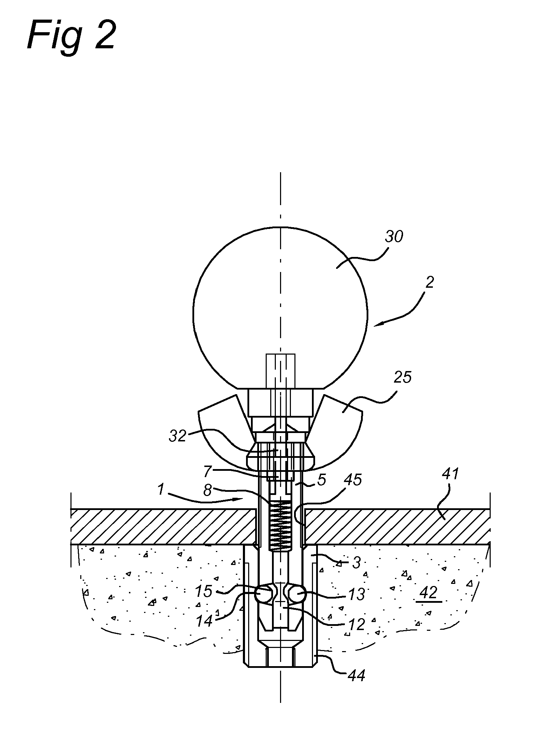

Fig. 2 shows the assembly of the fastening device 1 of the tool 2 attached thereto by magnetic force. The pin 32 pushes the core 7 against the spring force of the helical spring 8 into the release position in which the release part 15 is positioned opposite to the locking balls 13, 14. The insertion bush 3 is secured in a substrate 42, either by chemical means and/or by means of an external screw thread 44. An object 41, to be anchored by clamping, is placed on the substrate 42 in such a manner that a hole 45 in the object is disposed above the insertion bush 3. Whilst being lifted by the tool 2, the fastening device 1 is inserted through the hole 45 into the tubular body 3. After removal of the tool 2, the core 7 springs upwards and the locking part 12 of the core pushes the locking balls 13, 14 outwardly into the slot 40 in a radial direction so that the tubular body 5 is anchored in an axial direction. This object is clamped by tightening the wing nut 25 against the object 41 between the substrate 42 and the wing nut 25, thereby eliminating the tolerance in the connection, regardless of the thickness of the object 41.

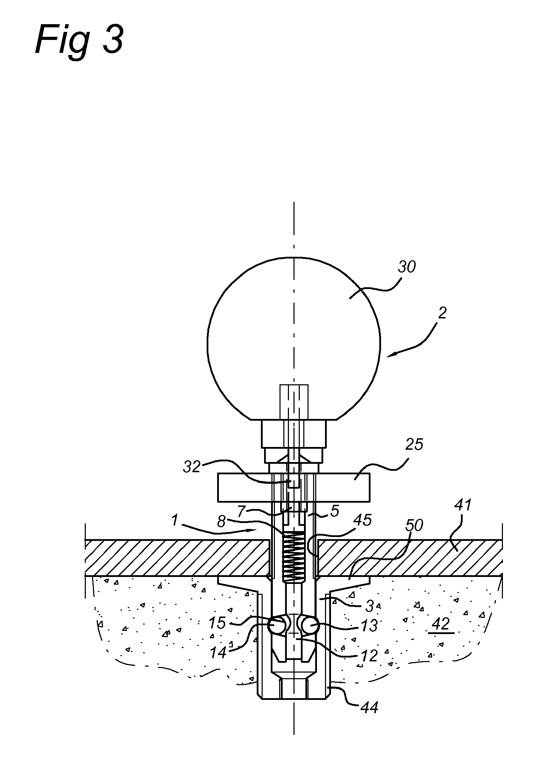

Fig. 3 shows the fastening device assembly 1, wherein the bush 3 is provided with a retainer flange 50 extending transversely in relation to the longitudinal direction of the bush 3. An object 41 can be firmly clamped between the clamping body 25 and the retainer flange 50 without greatly increasing the pressure exerted on the substrate.

In the embodiment shown, the retainer flange 50 is flush-mounted in order to be positioned at a level equal to the substrate, but it is also possible to allow the retainer flange 50 to extend slightly beyond the surface plane of the substrate or to be disposed slightly below the surface plane.

The device according to the invention is suitable for the fast and secure attachment of a variety of objects such as chairs or seats to a floor or platform, panels on a vertical or horizontal surface, the individual attachment of components constructed from parts of objects, such as temporary accommodations, stands , furniture, covers on trucks, boats etc.

## Claims

1. Fastening device (1) comprising an outer tubular body (5), an axially slidable core (7) placed within the tubular body, a spring member (8) mounted inside the tubular body which, on the one hand engages with the core (7) and on the other hand engages with the tubular body (5), at least one opening in the wall (6) of the tubular body and an axially slidable locking member (13, 14) which extends through the opening and is positioned in abutment against the core (7), wherein said core is provided on an upper end (19) of the tubular body (5) with an abutment surface (22) which can engage with a tool (2) for axial movement of the core (7) between a locking position in which a locking part (12) of the core lies in abutment against the locking member and a release position in which a relatively narrow release part (15) of the core is disposed in a radial direction opposite the locking member, **characterized in that** the core (7) is pressed in an upward direction by the spring member (8) into the locking/securing position, wherein the core can be brought into the release position by pressing the spring in a downward direction, wherein the tubular body (5) is provided on the upper end (19) with a head surface (20) which has a feed-through opening (21) towards the abutment surface (22), which is positioned in or beneath the head surface (20) in the locking position, and wherein tubular body (5) is provided on an outer side with a screw thread and a slidable clamping member (25) which can be moved along the screw thread.

2. Fastening device (1) according to claim 1, wherein the head surface (20) is provided with engagement means for a separable connection with an unlocking and placement tool (2).

3. Fastening device (1) according to any of the following claims, **characterized in that** the locking member comprises one or more locking balls.

4. Assembly of an unlocking and placement tool (2) and a fastening device (1) according to any of the claims 1 to 5, wherein the tool (2) comprises a hand grip (30) and a pin (32) extending from said hand grip, the hand grip being separably connectable with the tubular body (5) which, when connected, causes the pin (32) to engage with the core (7), in such a manner that this is moved in a downward direction into the release position and wherein the spring member (8), after separation from the tool (2), moves the core (7) into the locking position.

5. Assembly according to claim 4, wherein the hand grip (30) comprises a flat, magnetic abutment surface (31), the pin (32) extending therefrom at a length (H) which at least corresponds to the axial (Δ) distance between the locking member (12) and the release part (15) of the core (7) and in which the engagement means 10 of the tubular body are formed with a flat surface and from a magnetic material.

6. Assembly according to claim 5, wherein the magnetic attractive force between the abutment surface (31) and the engagement more or less corresponds to or is greater than the upward force exerted on the core (7) by the spring body (18).

7. Assembly of a fastening device according to any of the claims 1 to 3 and an insertion bush (3) provided with an internal annular slot (40) and with an external screw thread (44).

8. Assembly according to claim 7, wherein the insertion bush (3) is provided in the close proximity of the upper end with a retainer flange (50) extending laterally in relation to a longitudinal direction of the bush for the cooperative action with the clamping body (25).

9. Tool (2) for use with a fastening device according to any of the claims 1 to 3, comprising a magnetic abutment surface (31) with a pin (32) disposed transversely thereto.

10. Tool (2) according to claim 9, with a spherically shaped hand grip (30).
